# EUROPEAN PATENT SPECIFICATION

(11) **EP 0 626 409 B1**
(45) Date of publication and mention of the grant of the patent: **21.01.2004**
(21) Application number: 94303447.0
(22) Date of filing: 13.05.1994
(51) Int. Cl.: C08G 64/24

(54) **Method for making aromatic polycarbonates**
Verfahren zur Herstellung von Polycarbonaten
Procédé pour la préparation de polycarbonates

(30) Priority: 24.05.1993 US 66382
(43) Date of publication of application: 30.11.1994
(73) Proprietor: GENERAL ELECTRIC COMPANY, Schenectady, NY 12345 (US)
(72) Inventor: Boden, Eugene Pauling, Scotia, New York 12302 (US); Phelps, Peter David, Schenectady, New York 12306 (US)
(74) Representative: Szary, Anne Catherine, Dr.

(56) References cited:
- DE-A- 2 503 150
- US-A- 3 054 772
- US-A- 3 251 807
- US-A- 4 535 143

## Description

### Cross References to Related Application

Reference is made to copending applications RD-22,833 (USSN 08/066,380) and RD-22,841 (USSN 08/066,381) filed concurrently herewith.

### Background of the Invention

The present invention relates to a method for making polycarbonate by phosgenating a bisphenol in the presence of a phase transfer catalyst (PTC).

More particularly, the present invention relates to the employment of a PTC, such as a tetraalkylammonium or tetraalkyl phosphonium bromide as a condensation catalyst for the polymerization of bisphenol under interfacial reaction conditions.

As shown by Freitag et al, The Encylopedia of Polymer Science and Engineering, John Wiley & Sons, New York (1988), Second Edition, polycarbonates have been made by phosgenating bisphenols under interfacial reaction conditions using a tertiary organic amine, such as triethylamine as a condensation catalyst. Although tertiary organic amines having been found to be effective as bisphenol condensation catalysts, experience has shown that use of tertiary organic amines results in excess phosgene usage. Efforts have been made therefore to develop procedures to minimize excessive phosgene losses. For example, a reactor with an overhead condenser can be used to trap phosgene, as shown by Silva, U.S. patent 4,701,544, or the rate of heat generated during the course of bisphenol condensation can be monitored, as shown by Brunelle et al, U.S. patent 4,814,420.

Although tertiary organic amines have been found to be highly effective as condensation catalysts for building polycarbonate molecular weight during phosgenation, experience has shown that tertiary organic amines often lead to excessive phosgene usage as a result of phosgene hydrolysis, and/or chloroformate hydrolysis prior to the termination of capping. For example, in a phosgene hydrolysis rate study, it was found that at a triethylamine concentration of 6.64 x10⁻³ M, triethylamine effected phosgene hydrolysis at a relative rate of greater than 200 compared to a reference value of 1 without catalyst. With respect to rate of chloroformate hydrolysis, where a relative value of less than 0.01 has been found for a catalyst-free system, triethylamine shows a value of greater than 100.

In Campbell et al, U.S. patent 4,471,105, an interfacial polycarbonate poly condensation process is shown for making sterically hindered polycarbonate utilizing a quaternary phosphonium amino halide catalyst. Additional investigations with respect to phase transfer catalyst usage, such as the synthesis of copoly(carbonate-thiocarbonate)s from bisphenols and a mixture of phosgene and thiophosgene are shown by Tagle et al, European Polymer Journal 1987, 23(2), 109-112, and European Polymer Journal 1989, 25(6), 549-551.

Various condensation catalysts are constantly being evaluated to determine their effectiveness for polymerizing various types of polymers. Considerable effort is being maintained to determine the effectiveness of such condensation catalysts as replacement condensation catalysts for tertiary organic amines in conventional polycarbonate synthesis.

### Summary of the Invention

The present invention is based on the discovery that a phase transfer catalyst "PTC" having the formula,

(R)₄Q⁺X (1)

where R is selected from the same or different C₍₄₋₁₀₎ alkyl group, Q is a nitrogen or phosphorus atom, and X can be a halogen atom, or an -OR¹ group, where R¹ is a member selected from H, C₍₁₋₁₈₎ alkyl or C₍₆₋₁₈₎ aryl, has been found effective as a bisphenol condensation catalyst under interfacial reaction conditions between bisphenols, or oligomeric phenols, and chloroformate terminated bisphenols, or chloroformate terminated polycarbonate oligomers. In addition, it has been found that the relative rate of phosgene hydrolysis, or chloroformate hydrolysis for the PTC of formula (1) at a molar concentration of 6.64 x10⁻³ is considerably less than triethylamine. For example, as compared to values greater than 200 and 100 respectively for triethylamine as a phosgene or chloroformate hydrolysis catalyst at molar concentrations of 6.64 x10⁻³, a phase transfer catalyst within formula (1) has been found to have relative rate values of 1.7 to 3.5 for phosgene and about 1 for chloroformate.

### Statement of the Invention

There is provided by the present invention, a method for making polycarbonate, comprising,
(A) effecting reaction under interfacial reaction conditions at a pH in the range of 9 to 12.5 between a phenolic chain-stopper and a bisphenol of the formula, 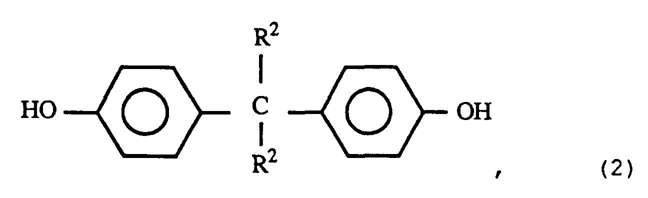 where R² is selected from the same or different C₍₁₋₄₎ alkyl group, and a substantially stoichiometric amount of phosgene in the presence of an amount of phase transfer catalyst of formula (1) which is effective for providing polycarbonate having a molecular weight in the range of about 25K to about 180K compared to a polystyrene standard, and
(B) substantialy eliminating chloroformate end groups in the resulting mixture of (A) prior to polycarbonate recovery.

Some of the bisphenols which are included within the formula (2) are, for example,
2,2-bis(4-hydroxy phenyl)propane (bisphenol A)
2,2-bis(4-hydroxy phenyl)butane (bisphenol B)
4,4-bis(hydroxy phenyl)heptane
2,2-bis(hydroxy phenyl)hexane
2,2-bis(4-hydroxy phenyl)pentane
2,2-bis(4-hydroxy phenyl)-4-methyl pentane
2,2-bis(4-hydroxy phenyl)heptane, and
3,3-bis(4-hydroxy phenyl)2,4-dimethyl pentane.

Some of the phase transfer catalysts which are included within formula (1) are for example,
[CH₃(CH₂)₃]₄NX
[CH₃(CH₂)₃]₄PX
[CH₃(CH₂)₅]₄NX
[CH₃(CH₂)₆]₄NX
[CH₃(CH₂)₄]₄NX where X is selected from Cl⁻, Br⁻ or -OR¹.

In the practice of a preferred form of the present invention, a mixture of bisphenol and a phenolic chain-stopper is phosgenated under interfacial reaction conditions in the presence of an organic solvent, in the presence of an effective amount of a phase transfer catalyst. Suitable organic solvents which can be used are, for example, chlorinated aliphatic hydrocarbons, such as methylene chloride, chloroform, carbon tetrachloride, dichloroethane, trichloroethane, tetrachloroethane, dichloropropane and 1,2-dichloroethylene; substituted aromatic hydrocarbons such as, chlorobenzene, o-dichlorobenzene, and the various chlorotoluenes. The chlorinated aliphatic hydrocarbons, especially methylene chloride, are preferred.

An effective amount of phase transfer catalyst is from 0.1 to 10 % by weight and preferably from 0.5 to 2 % by weight, based on the weight of bisphenol and phenolic chain-stopper charged to the mixture.

Sufficient alkali metal hydroxide can be utilized to raise the pH of the bisphenol reaction mixture to 10.5 prior to phosgenation to provide dissolution of some of the bisphenol and chain-stopper into the aqueous phase.

Aqueous alkali, or alkaline earth metal hydroxide can be used to maintain the pH of the phosgenation mixture which can be in the range of between about 9 to about 12.5 and preferably 10 to 12. Some of the alkali metal or alkaline earth metal hydroxides, which can be employed are for example, sodium hydroxide, potassium hydroxide, and calcium hydroxide. Sodium and potassium hydroxides, and particularly sodium hydroxide is preferred. The concentration of the alkali hydroxide solution which is utilized is not critical and can be between about 0.2-19 M. Aqueous metal hydroxide alkali concentrations of at least 5M are preferred.

It has been found that from about 0 to about 50 ppm of a triorgano amine, such as triethyl amine or tributyl amine can be tolerated in the reaction mixture without adversely affecting phosgene utilization.

Phosgenation of the bisphenol can be conducted in a wide variety of either batch or continuous reactors. Such reactors are, for example, stirred tank reactors, which may be either batch or continuous flow. Additional reactors which are included are agitated column and recirculating loop continuous reactors.

The volume ratio of aqueous to organic phase during and at the termination of the phosgenation reaction can be in the range of about 0.2-1:1. Reaction temperatures can be in the range of between about 15-50°C. When the preferred organic liquid is utilized, such as methylene chloride, the reaction may be conducted at reflux which can be 35°-42°C. The reaction can be conducted at atmospheric pressures, although sub- or superatmospheric pressures may be employed if desired.

During phosgenation, the mixture is agitated, such as, by using a stirrer or other conventional equipment. The phosgenation rate can vary from between about 0.02 - 0.2 mol of phosgene, per mol of bisphenol per minute.

Depending upon the molecular weight of polycarbonate desired, phenolic chain-stoppers can be used in a proportion of from 1 to 8 mole % based on the total moles of bisphenol and phenolic chain-stopper. Some of the phenolic chain-stoppers are, phenol, t-butyl phenol, p-cumyl phenol and chloroformates of these phenols.

Prior to polycarbonate recovery which can be achieved by standard techniques, such as filtration, decantation, and centrifugation, chloroformate end groups are substantially eliminated. One procedure which can be used is by agitation of the mixture until the presence of chloroformates cannot be detected. The detection procedure of Agree et al can be used employing 4-(4-nitrobenzyl)pyridine (NBP) as shown in Talanta, 1966, 13, 1151-1160. Spotting of commercially available phosgene detection paper, such as Chemcassette SP from MDA Scientific of Lincolnshire, Illinois, with a portion of the reaction mixture also can be employed.

Another chloroformate removal method is by adding low levels, such as 100 - 1000 ppm of a tertiary organic amine, such as triethylamine, followed by the use of additional phosgene to react with phenolic hydroxy. A third procedure is the addition of an equivalent level of phenolic hydroxy, such as bisphenol, chain-stopper or mixture based on the level of chloroformate detected by independent analytical techniques, such as a spectral technique or an indicator, such as NBP.

In order that those skilled in the art will be better able to practice the present invention, the following examples are given by way of illustration and not by way of limitation. All parts are by weight unless otherwise indicated.

### Example 1

Phosgene was introduced into a bisphenol phosgenation mixture at a rate of 0.75 g/min, (7.6 mmol/min) for 13.5 min (102 mmol). The mixture consisted of 22.9 g of bisphenol A (100 mmol), 0.376 g of phenol (4.0 mmol), 637 µL of a 40 weight % solution of tetrabutylammonium hydroxide (1.0 mmol) 200 ml of methylene chloride, and 100 ml of water. During the phosgenation, the mixture was maintained at a pH of 10.5 - 11 by drop-wise addition of a 50 weight % aqueous sodium hydroxide solution. Upon completion of the phosgenation, chloroformates were detected by use of phosgene detection paper or by employing 4-(4-nitrobenzo)pyridine (NBP) as described by A.N. Agree et al previously cited. The chloroformate end groups were eliminated by stirring the mixture for 50 minutes at a pH of 11. The brine was separated from the organic phase and the organic phase was washed with aqueous HCl and several times with water. The polycarbonate was obtained which had a molecular weight of 41.5K as determined by GPC analysis.

The above procedure was repeated except that instead of stirring the mixture for 50 minutes at pH 11, 18 µL of triethylamine (0.129 mmol) was added to the mixture. It was found that the chloroformate disappeared within 15 minutes. However, the molecular weight of the polycarbonate was only 39.5 K. Addition of 0.4 g of phosgene produced no detectable chloroformates employing the phosgene detection paper as previously described, and the molecular weight of the polycarbonate was found to increase to 41.5 K.

### Example 2

The procedure of example 1 was repeated except that 114 g (0.500 moles) of bisphenol A, 4.246 g of cumyl phenol (0.400 moles), 800 ml of methylene chloride, 200 ml of water and 2.28 ml of a 40% tetrabutylammonium hydroxide was used. While maintaining the pH at 10.8, phosgene was added to the mixture at the rate of 3.00 g/min. As a result, 50.94 g of phosgene (0.515 moles) was delivered to the reaction. The amount of phosgene employed corresponded to a 1.0 % excess of phosgene based on bisphenol A and the cumyl phenol chain-stopper. The nitrobenzylpyridine detection method indicated a chloroformate concentration of 1390 x10⁻⁶ molar. Upon addition of 0.150 g of bisphenol A to the reaction mixture, the chloroformates were found to have been completely consumed within 4 minutes. A polycarbonate was recovered having a molecular weight of 41.4 K.

Although the above examples are directed to only a few of the very many variables which can be employed in the practice of the method of the present invention, it should be understood that the present invention is directed to preparation of a much broader variety of polycarbonates utilizing the bisphenols, phase transfer catalyst and chain-stoppers shown in the description preceding these examples.

## Claims

1. A method for making polycarbonate, comprising,
(A) effecting reaction under interfacial reaction conditions at a pH in the range of 9 to 12.5 between a phenolic chain-stopper and a bisphenol of the formula, 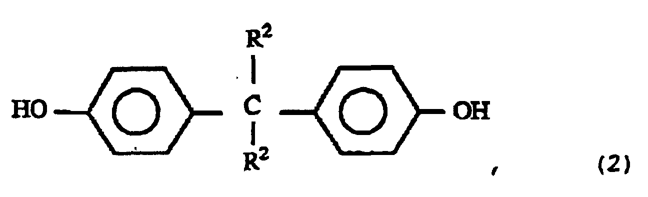 where R² is selected from the same or different C (₁₋₄) alkyl group, and a substantially stoichiometric amount of phosgene in the presence of an amount of phase transfer catalyst of the formula,
(R)₄Q⁺X
which is effective for providing polycarbonate having a molecular weight in the range of 25K to 180K compared to a polystyrene standard, and
(B) substantialy eliminating chloroformate end groups in the resulting mixture of (A) prior to polycarbonate recovery,
where R is selected from the same or different C₍₄₋₁₀₎ alkyl group, Q is a nitrogen or a phosphorus atom, X is selected from a halogen atom, or an -OR¹ group, R¹ is a member selected from the group consisting of H, C₍₁₋₈₎ alkyl and C₍₆₋₁₈₎ aryl, and R² is selected from the same or different C₍₁₋₄₎ alkyl group.

2. A method in accordance with claim 1, where the bisphenol is bisphenol A.

3. A method in accordance with claim 1, where the phase transfer catalyst is tetrabutylammonium hydroxide.

4. A method in accordance with claim 1, where the phase transfer catalyst is tetrabutylphosphonium bromide.

5. A method in accordance with claim 1, where the phase transfer catalyst is tetrabutylammonium bromide or tetrabutylammonium chloride.

6. A method in accordance with claim 1, where the phenolic chain-stopper is phenol.

7. A method in accordance with claim 1, where the phenolic chain-stopper is cumyl phenol.

8. A method in accordance with claim 1, where the chloroformate end groups are eliminated by addition 100 ppm to 1000 ppm of triethylamine followed by the addition of sufficient phosgene to react with any residual phenolic hydroxy.

9. A method in accordance with claim 1, where the chloroformate end groups are eliminated by addition of an aromatic phenol compound.

## Patentansprüche

1. Verfahren zur Herstellung von Polycarbonat, das
A) das Durchführen der Reaktion unter Grenzflächenreaktionsbedingungen bei einem pH-Wert im Bereich von 9 bis 12,5 zwischen einem phenolischen Kettenstopper und einem Bisphenol der Formel: 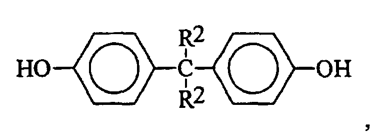 wobei R² aus gleichen oder verschieden C(₁₋₄)-Alkylgruppen ausgewählt ist, und einer im wesentlichen stöchiometrischen Menge an Phosgen in Gegenwart eines Anteils Phasentransferkatalysator der Formel:
(R)₄Q⁺X,
der wirksam ist zur Darstellung eines Polycarbonats mit einem Molekulargewicht von 25 K bis 180 K, verglichen mit einem Polystyrolstandard, und
B) im Wesentlichen die Eliminierung der Chlorformiat-Endgruppen aus der aus (A) erhältlichen Mischung vor der Polycarbonat-Rückgewinnung, aufweist,
wobei R, aus gleichen oder verschieden C₍₄₋₁₀₎ Alkylgruppen ausgewählt ist, Q ein Stickstoff- oder Phosphoratom ist, X ausgewählt aus einem Halogenatom oder einer -OR¹-Gruppe ist, wobei R¹ ausgewählt ist aus der Gruppe von H, C₍₁₋₁₈₎-Alkyl und C₍₆₋₁₈₎-Aryl, und R², aus gleichen oder verschieden C₍₁₋₄₎-Alkylgruppen ausgewählt ist.

2. Verfahren gemäß Anspruch 1, wobei das Bisphenol Bisphenol-A ist.

3. Verfahren gemäß Anspruch 1, wobei der Phasentransferkatalysator Tetrabutylammoniumhydroxid ist.

4. Verfahren gemäß Anspruch 1, wobei der Phasentransferkatalysator Tetrabutylphosphoniumbromid ist.

5. Verfahren gemäß Anspruch 1, wobei der Phasentransferkatalysator Tetrabutylammoniumbromid oder Tetrabutylammoniumchlorid ist.

6. Verfahren gemäß Anspruch 1, wobei der phenolische Kettenstopper Phenol ist.

7. Verfahren gemäß Anspruch 1, wobei der phenolische Kettenstopper Cumylphenol ist.

8. Verfahren gemäß Anspruch 1, wobei die Chlorformiat-Endgruppen durch die Zugabe von 100 ppm bis 1000 ppm Triethylamin entfernt werden, gefolgt von der Zugabe von ausreichend Phosgen, um mit den restlichen phenolischen Hydroxigruppen zu reagieren.

9. Verfahren gemäß Anspruch 1, wobei die Chlorformiat-Endgruppen durch die Zugabe einer aromatischen Phenolverbindung entfernt werden.

## Revendications

1. Procédé pour la fabrication du polycarbonate comprenant les étapes suivantes :
(A) réaliser une réaction sous des conditions interfaciales à un pH compris entre 9 et 12,5 entre un agent phénolique de terminaison de chaîne et un bisphénol de formule suivante : 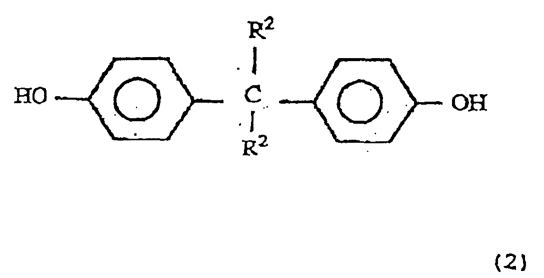 dans laquelle R², identique ou différent, est choisi parmi des groupes alkyl en C₁-C₄, et une quantité substantiellement stoichiométrique de phosgène en présence d'un catalyseur de transfert de phase de formule suivante :
(R)₄Q⁺X
qui se trouve en quantité suffisante pour obtenir du polycarbonate ayant un poids moléculaire compris entre 25K et 180K par rapport au polystyrène standard, et
(B) éliminer substantiellement les groupes chloroformates terminaux du mélange résultant de l'étape (A) avant de récupérer le polycarbonate,
dans lequel R, identique ou différent, est choisi parmi des groupes alkyl en C₄-C₁₀,
Q représente un atome d'hydrogène ou un atome de phosphore,
X est choisi parmi un atome d'halogène ou un groupe -OR¹, R¹ étant choisi dans le groupe consistant en un atome d'hydrogène, un groupe alkyl en C₁-C₁₈, un groupe aryl en C₆-C₁₈, et
R², identique ou différent, est choisi parmi des groupes alkyl en C₁-C₄.

2. Procédé selon la revendication 1, dans lequel le bisphénol est un bisphénol A.

3. Procédé selon la revendication 1, dans lequel le catalyseur de transfert de phase est de l'hydroxyde de tétrabutylammonium.

4. Procédé selon la revendication 1, dans lequel le catalyseur de transfert de phase est du bromure de tétrabutylphosphonium.

5. Procédé selon la revendication 1, dans lequel le catalyseur de transfert de phase est du bromure de tétrabutylammonium ou du chlorure de tétrabutylammonium.

6. Procédé selon la revendication 1, dans lequel l'agent phénolique de terminaison de chaîne est le phénol.

7. Procédé selon la revendication 1, dans lequel l'agent phénolique de terminaison de chaîne est du phénol de cumyle.

8. Procédé selon la revendication 1, dans lequel les groupes terminaux chloroformates sont éliminés par l'addition de 100 à 1000 ppm de triéthylamine, suivie par l'addition de suffisamment de phosgène pour qu'ils réagissent avec tous les composés hydroxyphénoliques résiduels.

9. Procédé selon la revendication 1, dans lequel les groupes terminaux chloroformates sont éliminés par addition d'un composé phénol aromatique.
